# EUROPEAN PATENT APPLICATION

(11) **EP 2 434 628 A2**
(43) Date of publication of application: **28.03.2012**
(21) Application number: 11182106.2
(22) Date of filing: 21.09.2011
(51) Int. Cl.: H02M 1/32, H02M 7/5387

(54) **Inverter device overvoltage protection method**

(30) Priority: 27.09.2010 JP 2010214657
(71) Applicant: Fuji Electric Co., Ltd., Kawasaki-shi 210-9530 (JP)
(72) Inventor: Higuchi, Shinichi, Kanagawa 210-9530 (JP)
(74) Representative: MERH-IP Matias Erny Reichl Hoffmann

(57) **Abstract**

An object is to provide an inverter device overvoltage protection method that can appropriately protect the inverter device 2 from an overvoltage condition. When a direct current Voltage rises, and a direct current Voltage detection value detected by a direct current voltage detector 52 exceeds a second direct current voltage level, a protective circuit 50 carries out a stop of the operation of an inverter device 2 by outputting an inhibit signal to a gate drive circuit 51, but it is determined at this time that the rise of the direct current voltage is temporary, and no error output signal is output from an error signal generator 55 to the exterior of the inverter device 2. Meanwhile, in the event that the direct current voltage rises further while the inverter device 2 is temporarily stopped, and the direct current voltage detection value exceeds a first direct current Voltage level, it is determined that protection of the inverter device 2 is necessary, and an error output signal is output to the exterior of the inverter device 2.

## Description

### BACKGROUND OF THE INVENTION

### 1. Technical Field

The present invention relates to an overvoltage protection method of an inverter device including a rectifier portion that converts alternating current voltage into direct current voltage, a smoothing capacitor that smoothes the direct current Voltage, and an inverter portion that converts the smoothed direct current voltage into alternating current voltage.

### 2. Related Art

When an error such as an overvoltage or overcurrent occurs while an inverter device is in operation, a continuation of the operation is carried out by automatically restarting the operation of the inverter device by carrying out a retry action (for example, JP-A-2000-209868).

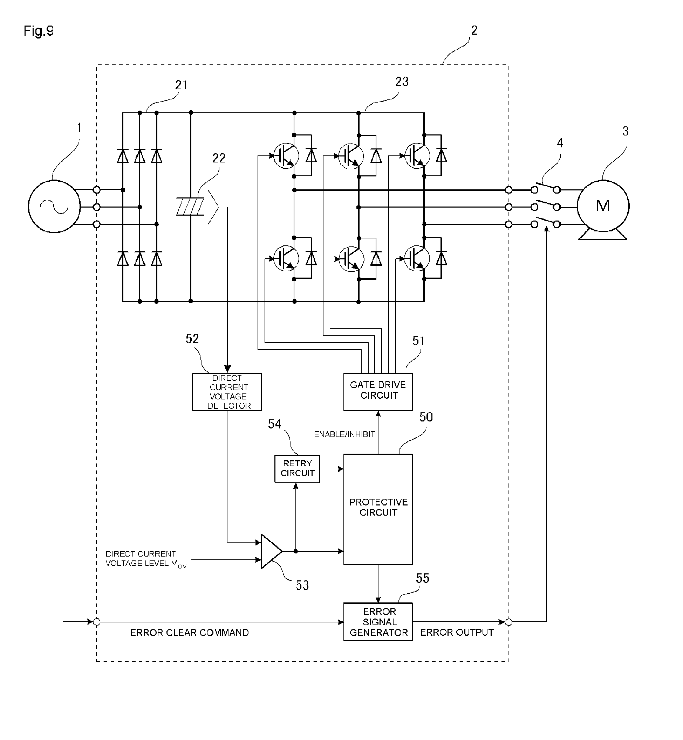

Fig. 9 is a circuit diagram of a heretofore known inverter device.

In the drawing, reference numeral 1 is an alternating current power source such as a commercial power source, 2 is an inverter device, and 3 is an alternating current motor, wherein alternating current power from the alternating current power source 1 is converted by the inverter device 2 into alternating current power with variable voltage and variable frequency, and the alternating current motor 3 is operated at a desired rotation speed by the converted alternating current power. Reference numeral 4 is a contactor provided between the inverter device 2 and alternating current motor 3.

Reference numeral 21 is a rectifier portion wherein diodes that rectify alternating current voltage from the alternating current power source 1 are configured in a three-phase bridge, 22 is a smoothing capacitor connected between direct current bus bars that smoothes the output of the rectifier portion 21, and 23 is an inverter portion that, with the smoothed direct current voltage across the smoothing capacitor 22 as an input, converts the direct current voltage into alternating current voltage with a desired frequency and voltage, and these form a reverse parallel circuit of a switching element, such as an IGBT, and freewheeling diodes connected in a three-phase bridge. A main circuit of the inverter device 2 is configured of the rectifier portion 21, smoothing capacitor 22, and inverter portion 23.

Reference numeral 51 is a gate drive circuit that supplies a gate signal to the switching element, such as an IGBT, configuring the inverter portion 23, 52 is a direct current voltage detector that detects the voltage across the smoothing capacitor 22, 53 is a comparator that compares a direct current Voltage detection value V_{dc} detected by the direct current voltage detector 52 and a predetermined direct current voltage level Vₒᵥ, and outputs an overvoltage signal when the direct current voltage detection value V_{dc} exceeds the direct current voltage level Vₒᵥ, 54 is a retry circuit that, after a temporary stop of the operation of the inverter device 2, outputs a retry signal causing a restart of the operation of the inverter device 2 based on a predetermined retry action condition, 55 is an error signal generator that outputs an error output signal to the exterior of the inverter device 2 when the number of temporary stops of the inverter device 2 reaches a predetermined number or more, and 50 is a protective circuit that carries out a temporary stop of the operation of the inverter device 2 by outputting an inhibit signal to the gate drive circuit 51 on receiving an overvoltage signal from the comparator 53, and carries out a restarting of the operation of the inverter device 2 by outputting an enable signal to the gate drive circuit 51 on receiving a retry signal from the retry circuit 54.

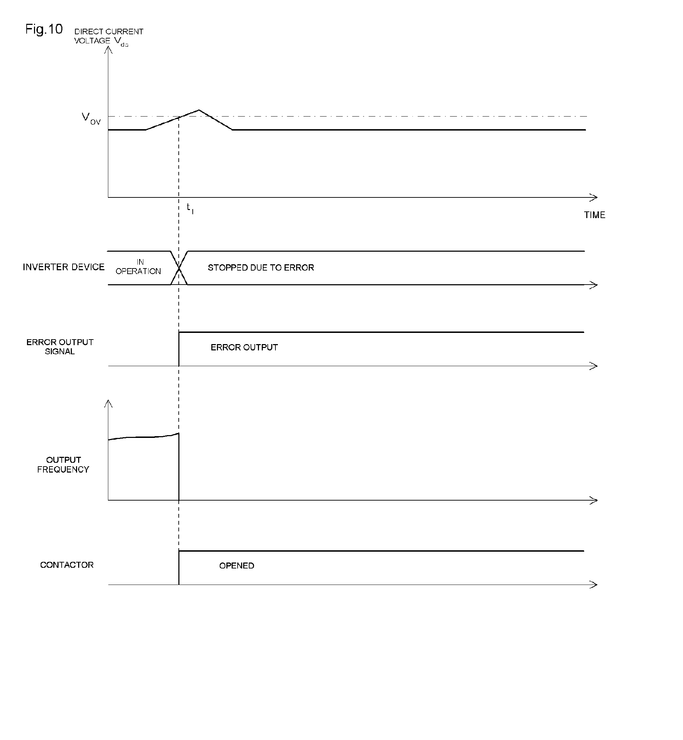

Fig. 10 is a waveform diagram showing an operation of Fig. 9, and hereafter, a description will be given of an operation of a heretofore known overvoltage protection method, using the operation waveform diagram of Fig. 10.

Herein, a description will be given of a case in which a stop of the inverter device 2 due to overvoltage is determined to be a device error the first time. When the direct current voltage rises for some reason, and the direct current voltage detection value V_{dc} detected by the direct current voltage detector 52 exceeds the direct current voltage level Vₒᵥ at a time t₁, the comparator 53 outputs an overvoltage signal. The overvoltage signal is input into the protective circuit 50, and the protective circuit 50 carries out a stop (closing the gates of the switching element configuring the inverter portion 23) of the operation of the inverter device 2 by outputting an inhibit signal to the gate drive circuit 51. Furthermore, as the number of temporary stops has reached the predetermined number (in this example, as it is the first temporary stop, it is determined that there is a device error) , an error signal is output from the protective circuit 50 to the error signal generator 55, and an error output signal is output by the error signal generator 55 to the exterior of the inverter device 2, thereby opening the contactor 4.

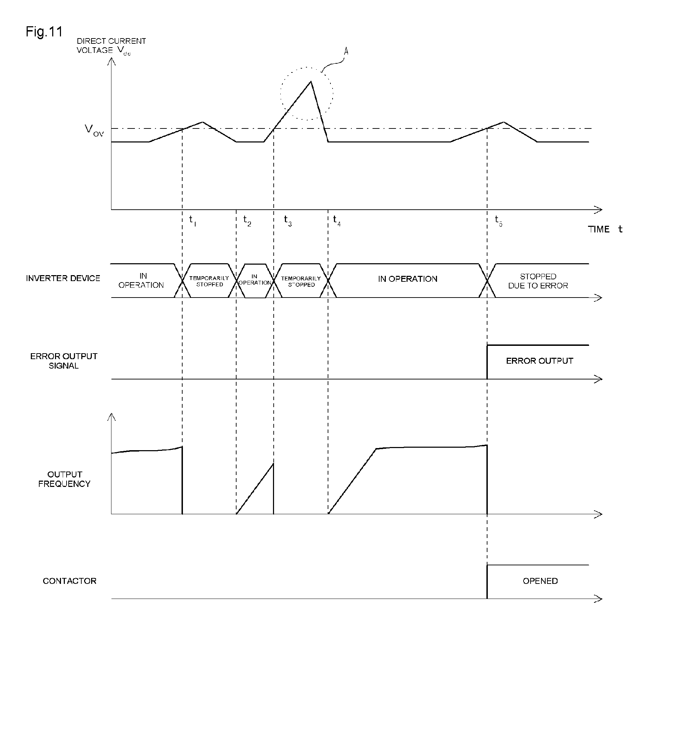

Also, Fig. 11 is an operation waveform diagram of a case in which it is determined that a temporary stop of the inverter device 2 due to overvoltage is a device error the third time.

When the direct current voltage detection value V_{dc} detected by the direct current Voltage detector 52 exceeds the direct current Voltage level Vₒᵥ at the time t₁, the comparator 53 outputs an overvoltage signal. The overvoltage signal is input into the protective circuit 50, and the protective circuit 50 temporarily stops the operation of the inverter device 2 by outputting an inhibit signal to the gate drive circuit 51, but as the number of temporary stops has not reached the predetermined number at this time, no error output signal is output from the error signal generator 55 to the exterior of the inverter device 2. Subsequently, a retry signal is output from the retry circuit 54 in the event that the predetermined retry action condition is satisfied at a time t₂. The protective circuit 50, on receiving the retry signal, carries out a restarting of the operation of the inverter device 2 by outputting an enable signal to the gate drive circuit 51. Herein, the predetermined retry action condition is, for example, that the restarting of the operation of the inverter device 2 is carried out after the predetermined time elapses after the operation of the inverter device 2 is temporarily stopped, or that the restarting of the operation of the inverter device 2 is carried out after the direct current voltage detection value V_{dc} drops to a predetermined direct current voltage level.

Operations at a time t₃ and a time t₄ when a second overvoltage is detected being the same as the operations at the time t₁ and time t₂ when the first overvoltage is detected, the operation of the inverter device 2 is temporarily stopped at the time t₃, and the operation of the inverter device 2 is restarted at the time t₄. Then, when the number of temporary stops of the inverter device 2 reaches three at a time t₅, the protective circuit 50 stops the operation of the inverter device 2 by outputting an inhibit signal to the gate drive circuit 51, and outputs the fact that the number of temporary stops has reached the predetermined number to the error signal generator 55. The error signal generator 55, on receiving the signal, outputs an error output signal to the exterior of the inverter device 2, thereby opening the contactor 4.

With the heretofore known technology, however, as an overvoltage of the inverter device 2 is detected, and a temporary stop and restarting of the operation of the inverter device carried out, based on the one direct current voltage level Vₒᵥ, the following problem exists.

That is, although the contactor 4 is provided between the output of the inverter device 2 and the alternating current motor 3, and the contactor 4 is opened in response to an error output signal of the error signal generator 55, with the object of protecting the inverter device 2, the error output signal is output after the number of temporary stops has reached the predetermined number.

At this time, even in the event that the direct current voltage rises further while the inverter device 2 is temporarily stopped, as shown in a portion A of Fig. 11, and protection of the device is necessary, there is a problem in that, as the error signal generator 55 does not output an error output signal when the number of temporary stops has not reached the predetermined number, it is not possible to carry out appropriate protection, such as opening the contactor 4.

In particular, with an inverter device 2 that drives a permanent magnet motor, the direct current voltage rises sharply due to induction voltage when the motor speed rises abnormally, and there is a possibility of this leading to destruction of the inverter device 2.

### SUMMARY OF THE INVENTION

An object of the invention is to provide an inverter device overvoltage protection method that can solve the heretofore described problem, and appropriately protect the inverter device from an overvoltage condition.

In order to achieve the object, an aspect of the invention is an overvoltage protection method of an inverter device including a rectifier portion that converts alternating current voltage into direct current voltage, a smoothing capacitor that smoothes the direct current Voltage, an inverter portion that converts the direct current voltage smoothed by the smoothing capacitor into alternating current Voltage, and a direct current Voltage detector that detects the direct current Voltage, wherein there are provided a first comparator that compares a direct current voltage detection value detected by the direct current voltage detector with a predetermined first direct current voltage level, a second comparator that compares the direct current Voltage detection value detected by the direct current Voltage detector with a predetermined second direct current voltage level, and an error signal generator that outputs an error of the inverter device to the exterior, the method including stopping the operation of the inverter device when the direct current Voltage detection value exceeds the second direct current voltage level, and outputting an error output signal to the exterior when the direct current voltage detection value exceeds the first direct current voltage level.

According to the invention, by determining that the rise of the direct current voltage is temporary, and stopping the operation of the inverter device without outputting an error output signal to the exterior, when the direct current voltage detection value exceeds the second direct current voltage level, while determining that protection of the inverter device is necessary and outputting an error output signal to the exterior when the direct current voltage detection value exceeds the first direct current voltage level, it is possible to appropriately protect the inverter device from an overvoltage condition.

### BRIEF DESCRIPTION OF THE DRAWINGS

Fig. 1 is a block diagram showing a first embodiment of the invention;
Fig. 2 is an operation waveform diagram illustrating an operation of Fig. 1;
Fig. 3 is a block diagram showing a second embodiment of the invention;
Fig. 4 is an operation waveform diagram illustrating an operation of Fig. 3;
Fig. 5 is a block diagram showing a third embodiment of the invention;
Fig. 6 is an operation waveform diagram illustrating an operation of Fig. 5;
Fig. 7 is a block diagram showing a fourth embodiment of the invention;
Fig. 8 is an operation waveform diagram illustrating an operation of Fig. 7;
Fig. 9 is a block diagram showing a heretofore known example;
Fig. 10 is an operation waveform diagram illustrating an operation of Fig. 9; and
Fig. 11 is an operation waveform diagram illustrating an operation of Fig. 9.

### DETAILED DESCRIPTION OF THE EMBODIMENTS

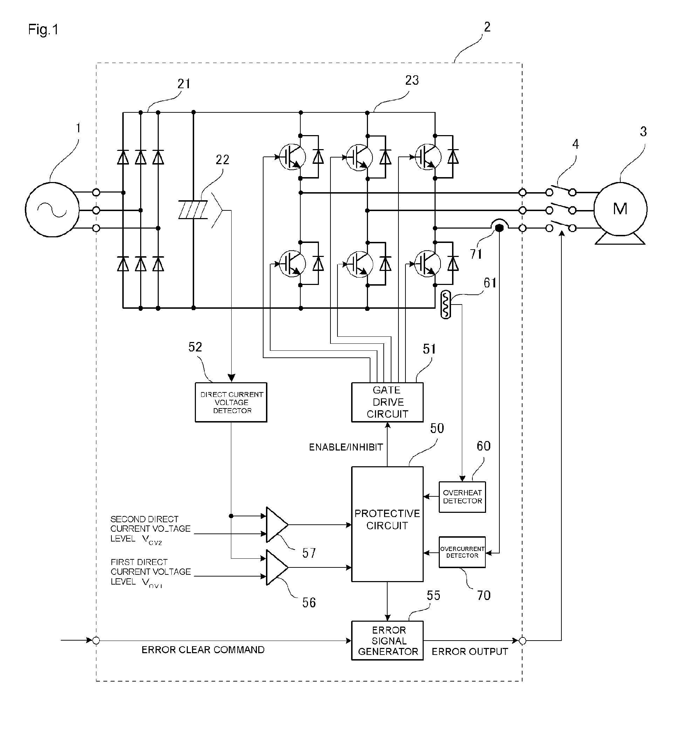

Fig. 1 is a block diagram of an inverter device showing a first embodiment of the invention, wherein the same reference numerals or characters are given to components having the same function as in a heretofore known example, and a description thereof is omitted.

In the drawing, reference numeral 56 is a first comparator that compares a direct current voltage detection value V_{dc} detected by a direct current voltage detector 52 and a predetermined first direct current voltage level Vₒᵥ₁ (a value fixed at around 130% of a rated direct current voltage), and outputs an overvoltage signal when the direct current voltage detection value V_{dc} exceeds the first direct current voltage level Vₒᵥ₁, and 57 is a second comparator that compares the direct current voltage detection value V_{dc} detected by the direct current voltage detector 52 and a predetermined second direct current voltage level Vₒᵥ₂ (a value fixed at around 125% of the rated direct current voltage), and outputs an overvoltage signal when the direct current voltage detection value V_{dc} exceeds the second direct current voltage level Vₒᵥ₂.

Reference numeral 60 is an overheat detector that detects an overheat of an inverter device 2 based on a comparison of a temperature detection value of a thermistor 61 provided in the vicinity of a switching element, such as an IGBT, configuring an inverter portion 23 and a predetermined overheat level. Reference numeral 70 is an overcurrent detector that detects an overcurrent of the inverter device 2 based on a comparison of a current detection value of a current detector 71 that detects an output current of the inverter device 2 and a predetermined overcurrent level. The outputs of the overheat detector 60 and overcurrent detector 70 are sent to a protective circuit 50 and, when there is either an overheat error or overcurrent error, a protective action such as a temporary stop, a retry, or a stop in accordance with an error output signal of the inverter device 2 is carried out in the same way as when there is an overvoltage error, to be described hereafter.

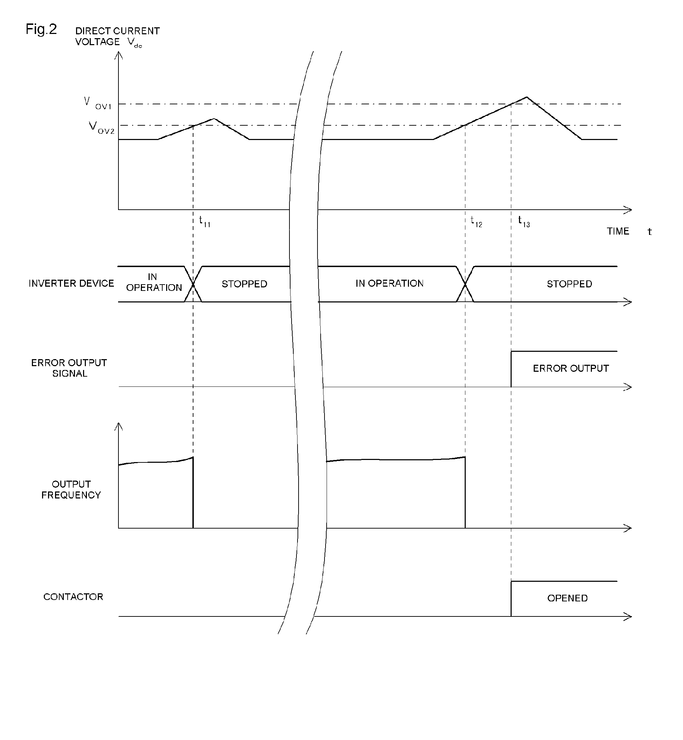

Hereafter, a description will be given of an operation of the first embodiment of the invention, using an operation waveform diagram of Fig. 2.

When the direct current voltage rises for some reason, and the direct current voltage detection value V_{dc} detected by the direct current voltage detector 52 exceeds the second direct current voltage level Vₒᵥ₂, the comparator 57 outputs an overvoltage signal at a time t₁₁. The overvoltage signal is input into the protective circuit 50, and the protective circuit 50 carries out a stop (closing the gates of the switching element configuring the inverter portion 23) of the operation of the inverter device 2 by outputting an inhibit signal to a gate drive circuit 51, but it is determined at this time that the rise of the direct current voltage is temporary, and no error output signal is output from an error signal generator 55 to the exterior of the inverter device 2.

Meanwhile, in the event that the direct current voltage detection value V_{dc} detected by the direct current voltage detector 52 exceeds the second direct current voltage level Vₒᵥ₂ at a time t₁₂, the comparator 57 outputs an overvoltage signal. The overvoltage signal is input into the protective circuit 50, and the protective circuit 50 stops the operation of the inverter device 2 by outputting an inhibit signal to the gate drive circuit 51. Herein, in the event that the direct current voltage rises further while the inverter device 2 is temporarily stopped, and the direct current voltage detection value V_{dc} detected by the direct current voltage detector 52 exceeds the first direct current voltage level Vₒᵥ₁ at a time t₁₃, it is determined that protection of the inverter device 2 is necessary, and the comparator 56 outputs an overvoltage signal to the protective circuit 50. In the protective circuit 50, an error signal is output to the error signal generator 55 on the overvoltage signal being input from the comparator 56. On receiving the signal, an error output signal is output to the exterior of the inverter device 2 by the error signal generator 55, an error occurrence is displayed on an unshown indicator, and a contactor 4 is opened. The error output signal can be cleared by an error clear command input from the exterior of the inverter device 2.

In this way, by providing two direct current Voltage levels, the first direct current voltage level Vₒᵥ₁ and second direct current voltage level Vₒᵥ₂, it is possible to appropriately protect the inverter device 2 from an overvoltage condition.

In particular, in the inverter device 2, which drives a permanent magnet motor, the direct current voltage rises due to an induction voltage when the motor speed rises abnormally for some reason, but as the error signal generator 55 opens the contactor 4 by outputting an error output signal to the exterior at this time, it is possible to avoid a further rise of the direct current voltage of the inverter device 2 due to energy flowing in from the motor.

Also, according to the overvoltage protection of the invention, overvoltage protection is possible even when the motor is not being driven while the inverter device 2 is stopped. For example, when a permanent magnet motor is connected to the inverter device 2, the permanent magnet motor acts as a generator when rotating in response to an external force, and energy is supplied to the inverter device 2 causing the direct current voltage in the inverter device 2 to rise, but as the error signal generator 55 opens the contactor 4 by outputting an error output signal to the exterior when the direct current Voltage detection value V_{dc} exceeds the first direct current voltage level Vₒᵥ₁, it is possible to protect the inverter device 2 while it is stopped.

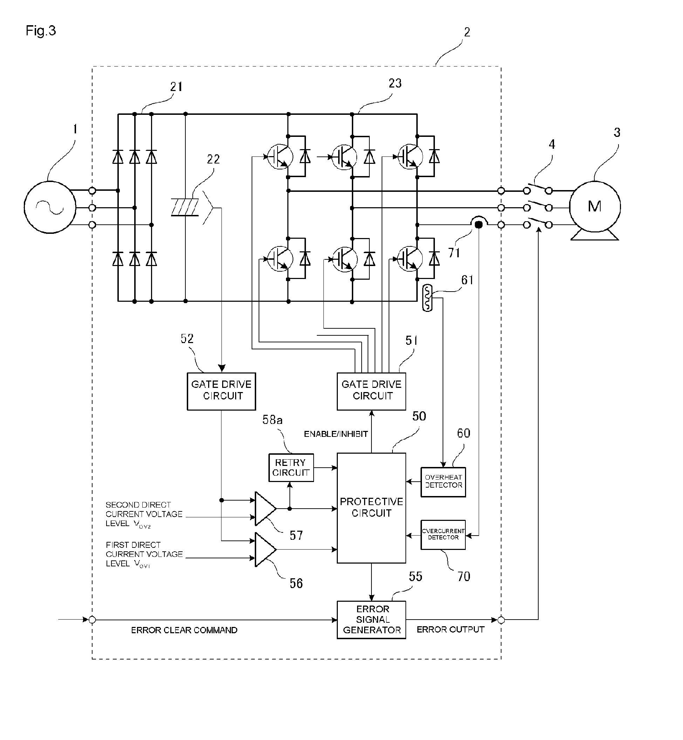

Fig. 3 is a block diagram of an inverter device showing a second embodiment of the invention, wherein the same reference numerals or characters are given to a component having the same function as in Fig. 1, and a description thereof is omitted.

Reference numeral 58a is a retry circuit that carries out a restarting of operation (retry) after a temporary stop of the inverter device 2 wherein, after the direct current voltage detection value V_{dc} detected by the direct current voltage detector 52 exceeds the second direct current voltage level Vₒᵥ₂, and the inverter device 2 is temporarily stopped, a retry signal for restarting the operation of the inverter device 2 is output when a predetermined time T₁ elapses. Herein, the predetermined time T₁ is set at a time sufficient for the direct current voltage to drop to a safe value (for example, a value fixed at around 120% of the rated direct current voltage) smaller than the second direct current voltage level Vₒᵥ₂.

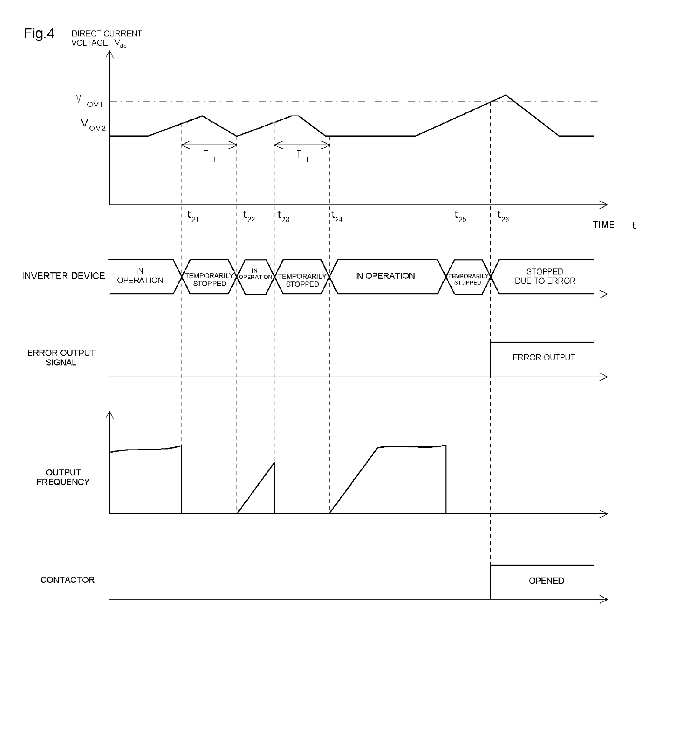

Hereafter, a description will be given of an operation of the second embodiment of the invention, using an operation waveform diagram of Fig. 4.

When the direct current voltage rises for some reason, and the direct current voltage detection value V_{dc} detected by the direct current voltage detector 52 exceeds the second direct current voltage level Vₒᵥ₂ at a time t₂₁, the comparator 57 outputs an overvoltage signal. The overvoltage signal is input into the protective circuit 50, and the protective circuit 50 carries out a temporary stop (closing the gates of the switching element configuring the inverter portion 23) of the operation of the inverter device 2 by outputting an inhibit signal to the gate drive circuit 51, but it is determined at this time that the rise of the direct current voltage is temporary, and no error output signal is output from the error signal generator 55 to the exterior of the inverter device 2.

Meanwhile, the overvoltage signal is input into the retry circuit 58a, and the time from the overvoltage signal being input is measured by a timer in the retry circuit 58a. A retry signal is output at a time t₂₂ at which the measured time reaches the predetermined time T₁. The protective circuit 50, on receiving the retry signal, automatically restarts the operation of the inverter device 2 by outputting an enable signal to the gate drive circuit 51.

In a case too in which the direct current voltage detection value V_{dc} exceeds the second direct current voltage level Vₒᵥ₂ again a time t₂₃, a temporary stop and restart of the operation of the inverter device 2 are carried out in the way heretofore described, but no error output signal is output from the error signal generator 55 to the exterior of the inverter device 2 provided that the direct current voltage detection value V_{dc} does not exceed the first direct current voltage level Vₒᵥ₁.

Meanwhile, in the event that the direct current voltage rises further while the inverter device 2 is temporarily stopped due to the direct current voltage detection value V_{dc} exceeding the second direct current voltage level Vₒᵥ₂ at a time t₂₅, and the direct current voltage detection value V_{dc} exceeds the first direct current voltage level Vₒᵥ₁ at a time t₂₆, it is determined that protection of the inverter device 2 is necessary, and the comparator 56 outputs an overvoltage signal to the protective circuit 50. In the protective circuit 50, as well as no automatic restarting of the operation of the inverter device 2 of the kind previously described being carried out, an error signal is output to the error signal generator 55, the error signal generator 55 outputs an error output signal to the exterior of the inverter device 2 on receiving the error signal, an error occurrence is displayed on an unshown indicator, and the contactor 4 is opened.

In this way, by providing two direct current voltage levels, the first direct current voltage level Vₒᵥ₁ and second direct current voltage level Vₒᵥ₂, determining that the rise of the direct current voltage is temporary, temporarily stopping the inverter device 2 without outputting an error output signal, and restarting the operation of the inverter device 2 when the predetermined time T₁ elapses when only the second direct current voltage level Vₒᵥ₂ is exceeded, while stopping the operation of the inverter device 2 and outputting an error output signal to the exterior from the error signal generator 55 when the first direct current Voltage level Vₒᵥ₁ is exceeded, it is possible to appropriately protect the inverter device 2 from an overvoltage condition.

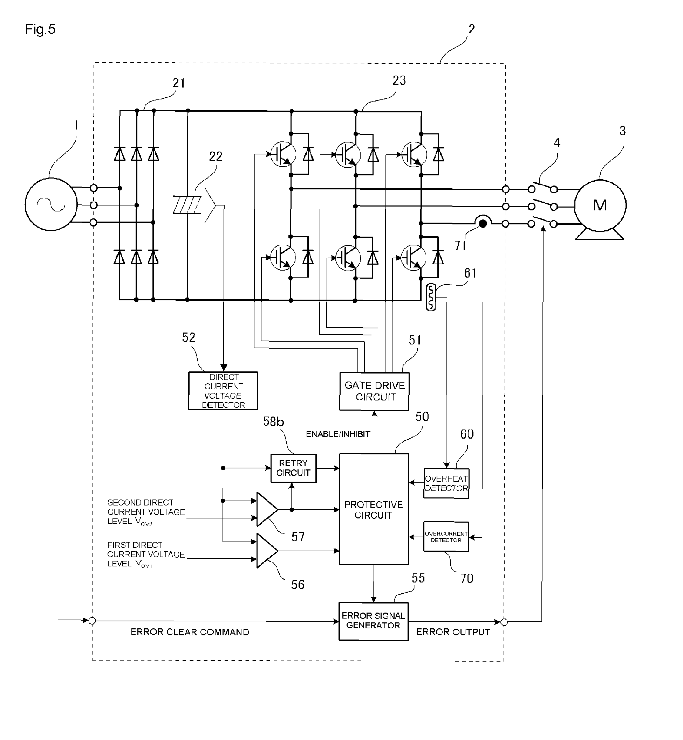

Fig. 5 is a block diagram of an inverter device showing a third embodiment of the invention, wherein the same reference numerals or characters are given to a component having the same function as in Fig. 1, and a description thereof is omitted.

Reference numeral 58b is a retry circuit that carries out a restarting of operation (retry) after a temporary stop of the inverter device 2 wherein, after the direct current voltage detection value V_{dc} detected by the direct current Voltage detector 52 exceeds the second direct current voltage level Vₒᵥ₂, and the inverter device 2 is temporarily stopped, a retry signal for restarting the operation of the inverter device 2 is output when the direct current voltage drops to a third direct current voltage level Vₒᵥ₃, preset at around 120% of the rated direct current voltage, smaller than the second direct current voltage level Vₒᵥ₂.

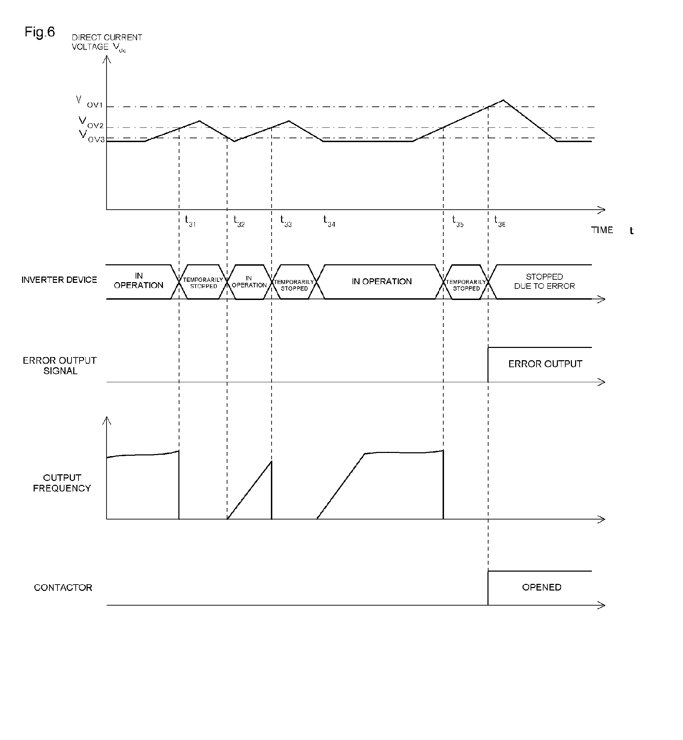

Hereafter, a description will be given of an operation of the third embodiment of the invention, using an operation waveform diagram of Fig. 6.

When the direct current voltage rises for some reason, and the direct current voltage detection value V_{dc} detected by the direct current voltage detector 52 exceeds the second direct current voltage level Vₒᵥ₂ at a time t₃₁, the comparator 57 outputs an overvoltage signal. The overvoltage signal is input into the protective circuit 50, and the protective circuit 50 carries out a temporary stop (closing the gates of the switching element configuring the inverter portion 23) of the operation of the inverter device 2 by outputting an inhibit signal to the gate drive circuit 51, but it is determined at this time that the rise of the direct current voltage is temporary, and no error output signal is output from the error signal generator 55 to the exterior of the inverter device 2.

Meanwhile, the overvoltage signal is input into the retry circuit 58b, the direct current voltage detection value V_{dc} is monitored in the retry circuit 58b, and a retry signal is output at a time t₃₂ at which the direct current voltage detection value V_{dc} drops to the third direct current voltage level Vₒᵥ₃. The protective circuit 50, on receiving the retry signal, automatically restarts the operation of the inverter device 2 by outputting an enable signal to the gate drive circuit 51. Operations at a time t₃₃ and a time t₃₄ being the same as the operations at the time t₃₁ and time t₃₂, a description will be omitted here.

Then, in the event that the direct current voltage rises further while the inverter device 2 is temporarily stopped due to the direct current voltage detection value V_{dc} exceeding the second direct current voltage level Vₒᵥ₂ at a time t₃₅, and the direct current voltage detection value V_{dc} exceeds the first direct current voltage level Vₒᵥ₁ at a time t₃₆, it is determined that protection of the inverter device 2 is necessary, and an overvoltage signal is output to the protective circuit 50. In the protective circuit 50, as well as no automatic restarting of the operation of the inverter device 2 of the kind previously described being carried out, an error signal is output to the error signal generator 55, the error signal generator 55 outputs an error output signal to the exterior of the inverter device 2 on receiving the error signal, an error occurrence is displayed on an unshown indicator, and the contactor 4 is opened.

In this way, by providing two direct current voltage levels, the first direct current voltage level Vₒᵥ₁ and second direct current voltage level Vₒᵥ₂, determining that the rise of the direct current voltage is temporary, temporarily stopping the inverter device 2 without outputting an error output signal, and restarting the operation of the inverter device 2 when the direct current voltage detection value V_{dc} drops to the third direct current voltage level Vₒᵥ₃ when only the second direct current voltage level Vₒᵥ₂ is exceeded, while stopping the operation of the inverter device 2 and outputting an error output signal to the exterior from the error signal generator 55 when the first direct current voltage level Vₒᵥ₁ is exceeded, it is possible to appropriately protect the inverter device 2 from an overvoltage condition.

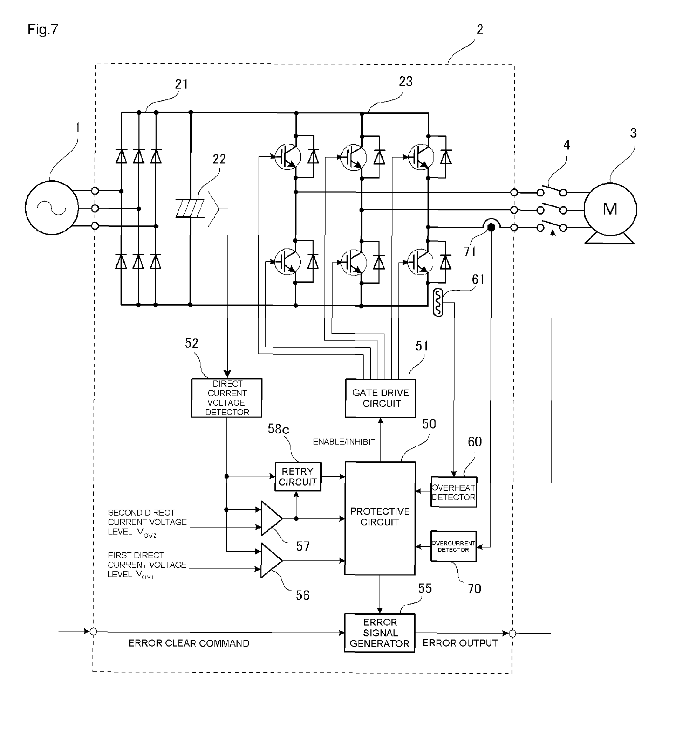

Fig. 7 is a block diagram of an inverter device showing a fourth embodiment of the invention, wherein the same reference numerals or characters are given to a component having the same function as in Fig. 1, and a description thereof is omitted.

Reference numeral 58c is a retry circuit that carries out a restarting of operation (retry) after a temporary stop of the inverter device 2 wherein, after the direct current voltage detection value V_{dc} detected by the direct current Voltage detector 52 exceeds the second direct current voltage level Vₒᵥ₂, and the inverter device 2 is temporarily stopped, a retry signal for restarting the operation of the inverter device 2 is output when the predetermined time T₁ elapses, and the direct current voltage drops to the predetermined third direct current Voltage level Vₒᵥ₃.

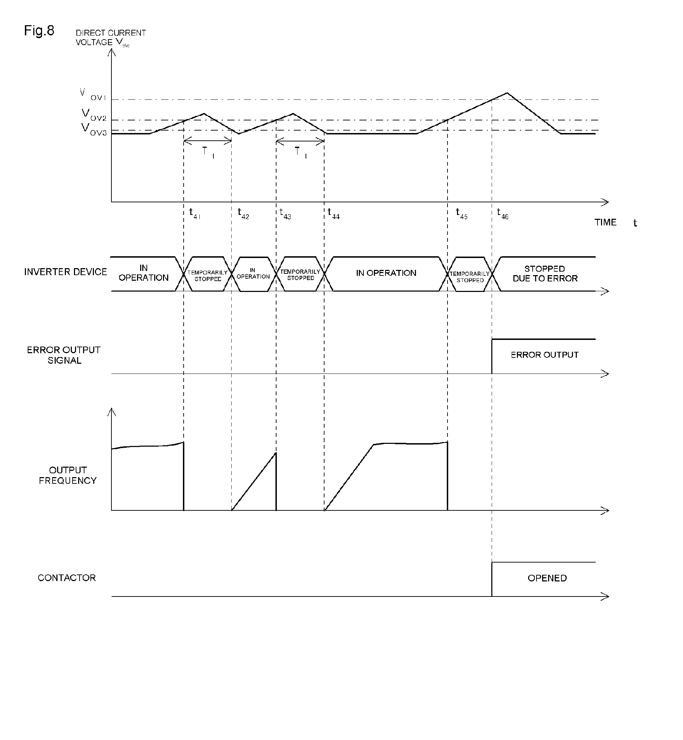

Hereafter, a description will be given of an operation of the fourth embodiment of the invention, using an operation waveform diagram of Fig. 8.

When the direct current voltage rises for some reason, and the direct current voltage detection value V_{dc} detected by the direct current voltage detector 52 exceeds the second direct current voltage level Vₒᵥ₂ at a time t₄₁, the comparator 57 outputs an overvoltage signal. The overvoltage signal is input into the protective circuit 50, and the protective circuit 50 carries out a temporary stop (closing the gates of the switching element configuring the inverter portion 23) of the operation of the inverter device 2 by outputting an inhibit signal to the gate drive circuit 51, but it is determined at this time that the rise of the direct current voltage is temporary, and no error output signal is output from the error signal generator 55 to the exterior of the inverter device 2.

Meanwhile, the overvoltage signal is input into the retry circuit 58c, and a retry signal is output by the retry circuit 58c at a time t₄₂ at which the time measured from the overvoltage signal being input reaches the predetermined time T₁, and the direct current voltage value V_{dc} drops to the third direct current voltage level Vₒᵥ₃. The protective circuit 50, on receiving the retry signal, automatically restarts the operation of the inverter device 2 by outputting an enable signal to the gate drive circuit 51. Operations at a time t₄₃ and a time t₄₄ being the same as the operations at the time t₄₁ and time t₄₂, a description will be omitted here.

Then, in the event that the direct current voltage rises further while the inverter device 2 is temporarily stopped due to the direct current voltage detection value V_{dc} exceeding the second direct current voltage level Vₒᵥ₂ at a time t₄₅, and the direct current voltage detection value V_{dc} exceeds the first direct current voltage level Vₒᵥ₁ at a time t₄₆, it is determined that protection of the inverter device 2 is necessary, and the comparator 56 outputs an overvoltage signal to the protective circuit 50. In the protective circuit 50, as well as no automatic restarting of the operation of the inverter device 2 of the kind previously described being carried out, an error signal is output to the error signal generator 55, the error signal generator 55 outputs an error output signal to the exterior of the inverter device 2 on receiving the error signal, an error occurrence is displayed on an unshown indicator, and the contactor 4 is opened.

In this way, by providing two direct current Voltage levels, the first direct current Voltage level Vₒᵥ₁ and second direct current Voltage level Vₒᵥ₂, determining that the rise of the direct current voltage is temporary, temporarily stopping the inverter device 2 without outputting an error output signal, and restarting the operation of the inverter device 2 when the time measured from the overvoltage signal being input reaches the predetermined time T₁ and the direct current voltage value V_{dc} drops to the third direct current Voltage level Vₒᵥ₃ when only the second direct current voltage level Vₒᵥ₂ is exceeded, while stopping the operation of the inverter device 2 and outputting an error output signal to the exterior from the error signal generator 55 when the first direct current voltage level Vₒᵥ₁ is exceeded, it is possible to appropriately protect the inverter device 2 from an overvoltage condition.

In each of the embodiments, the contactor 4 is opened by an error output signal being output from the error signal generator 55 to the exterior of the inverter device 2 when the direct current Voltage detection value V_{dc} exceeds the first direct current voltage level Vₒᵥ₁, but when an overheat error signal is input into the protective circuit 50 from the overheat detector 60, or when an overcurrent error signal is input from the overcurrent detector 70, the contactor 4 may be opened by an error signal being output from the protective circuit 50 to the error signal generator 55, and an error output signal being output from the error signal generator 55 to the exterior of the inverter device 2.

Furthermore, when the number of temporary stops of the inverter device 2 reaches a predetermined number (for example, five times), that is, when the condition in which the direct current voltage detection value V_{dc} exceeds the second direct current voltage level Vₒᵥ₂ but does not exceed the first direct current voltage level Vₒᵥ₁ reaches a predetermined number of occurrences, it is determined that there have been too many retries, and the contactor 4 may be opened by an error signal being output from the protective circuit 50 to the error signal generator 55, and an error output signal being output from the error signal generator 55 to the exterior of the inverter device 2.
Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. An overvoltage protection method of an inverter device (2) including a rectifier portion (21) that converts alternating current Voltage into direct current voltage, a smoothing capacitor (22) that smoothes the direct current voltage, an inverter portion (23) that converts the direct current voltage smoothed by the smoothing capacitor (22) into alternating current voltage, and a direct current Voltage detector (52) that detects the direct current voltage, wherein there are provided:
a first comparator (56) that compares a direct current voltage detection value detected by the direct current Voltage detector with a predetermined first direct current voltage level;
a second comparator (57) that compares the direct current voltage detection value detected by the direct current voltage detector with a predetermined second direct current Voltage level; and
an error signal generator (55) that outputs an error of the inverter device (2) to the exterior;
the method comprising:
stopping the operation of the inverter device (2) when the direct current voltage detection value exceeds the second direct current voltage level; and
outputting an error output signal to the exterior when the direct current voltage detection value exceeds the first direct current voltage level.

2. The overvoltage protection method of an inverter device according to claim 1,
the method further comprising:
restarting the operation of the inverter device (2) after a predetermined time elapses.

3. An overvoltage protection method of an inverter device according to claim 1,
the method further comprising:
restarting the operation of the inverter device (2) when the direct current voltage detection value drops to a predetermined third direct current voltage level.

4. An overvoltage protection method of an inverter device according to claim 1,
the method further comprising:
restarting the operation of the inverter device (2) when a predetermined time elapses and the direct current Voltage detection value drops to a predetermined third direct current Voltage level.

5. An overvoltage protection method of an inverter device including a rectifier portion that converts alternating current voltage into direct current voltage, a smoothing capacitor that smoothes the direct current voltage, an inverter portion that converts the direct current voltage smoothed by the smoothing capacitor into alternating current voltage, and a direct current voltage detector that detects the direct current voltage, wherein there are provided:
a first comparator that compares a direct current voltage detection value detected by the direct current Voltage detector with a predetermined first direct current voltage level;
a second comparator that compares the direct current voltage detection value detected by the direct current Voltage detector with a predetermined second direct current voltage level; and
an error signal generator that outputs an error of the inverter device to the exterior, the method comprising:
stopping the operation of the inverter device when the direct current voltage detection value exceeds the second direct current voltage level;
restarting the operation of the inverter device after a predetermined time elapses; and
outputting an error output signal to the exterior when the direct current voltage detection value exceeds the first direct current voltage level.

6. An overvoltage protection method of an inverter device including a rectifier portion that converts alternating current voltage into direct current voltage, a smoothing capacitor that smoothes the direct current voltage, an inverter portion that converts the direct current voltage smoothed by the smoothing capacitor into alternating current voltage, and a direct current voltage detector that detects the direct current voltage, wherein there are provided:
a first comparator that compares a direct current voltage detection value detected by the direct current Voltage detector with a predetermined first direct current voltage level;
a second comparator that compares the direct current voltage detection value detected by the direct current Voltage detector with a predetermined second direct current voltage level; and
an error signal generator that outputs an error of the inverter device to the exterior, the method comprising:
stopping the operation of the inverter device when the direct current voltage detection value exceeds the second direct current voltage level;
restarting the operation of the inverter device when the direct current voltage detection value drops to a predetermined third direct current voltage level; and
outputting an error output signal to the exterior when the direct current voltage detection value exceeds the first direct current voltage level.

7. An overvoltage protection method of an inverter device including a rectifier portion that converts alternating current voltage into direct current voltage, a smoothing capacitor that smoothes the direct current voltage, an inverter portion that converts the direct current voltage smoothed by the smoothing capacitor into alternating current voltage, and a direct current voltage detector that detects the direct current voltage, wherein there are provided:
a first comparator that compares a direct current voltage detection value detected by the direct current Voltage detector with a predetermined first direct current voltage level;
a second comparator that compares the direct current voltage detection value detected by the direct current Voltage detector with a predetermined second direct current voltage level; and
an error signal generator that outputs an error of the inverter device to the exterior, the method comprising:
stopping the operation of the inverter device when the direct current voltage detection value exceeds the second direct current voltage level;
restarting the operation of the inverter device when a predetermined time elapses and the direct current voltage detection value drops to a predetermined third direct current voltage level; and
outputting an error output signal to the exterior when the direct current voltage detection value exceeds the first direct current voltage level.
